# EUROPÄISCHE PATENTSCHRIFT

(11) **EP 3 864 454 B1**
(45) Veröffentlichungstag und Bekanntmachung des Hinweises auf die Patenterteilung: **24.01.2024**
(21) Anmeldenummer: 19782533.4
(22) Anmeldetag: 27.09.2019
(51) Int. Cl.: G02B 21/16, G01N 21/64, G02B 21/36, G02B 27/58

(54) **VERFAHREN UND VORRICHTUNG ZUR HOCHAUFGELOESTEN FLUORESZENZMIKROSKOPIE**
METHOD AND DEVICE FOR HIGH-RESOLUTION FLUORESCENCE MICROSCOPY
PROCÉDÉ ET DISPOSITIF DE MICROSCOPIE À FLUORESCENCE HAUTE RÉSOLUTION

(30) Priorität: 10.10.2018 DE 102018124984
(43) Veröffentlichungstag der Anmeldung: 18.08.2021
(73) Patentinhaber: Friedrich-Schiller-Universität Jena, 07743 Jena (DE)
(72) Erfinder: WEIGEL, Daniel, 07743 Jena (DE); KOWARSCHIK, Richard, 07907 Schleiz (DE); STARK, Andreas, 99441 Magdala (DE); SCHMIDL, Lars, 99085 Erfurt (DE); GEIS, Christian, 07749 Jena (DE)
(74) Vertreter: Gleim Petri Patent- und Rechtsanwaltspartnerschaft mbB
(86) Internationale Anmeldenummer: PCT/EP2019/076248
(87) Internationale Veröffentlichungsnummer: WO 2020/074278

(56) Entgegenhaltungen:
- EP-A1- 2 801 854
- CN-A- 106 124 468
- DE-A1-102016 007 839
- JUNHONG MIN ET AL: "Fluorescent microscopy beyond diffraction limits using speckle illumination and joint support recovery", SCIENTIFIC REPORTS, Bd. 3, Nr. 1, 25. Juni 2013 (2013-06-25), XP055648088, DOI: 10.1038/srep02075
- ZEYU ZHAO ET AL: "High-power homogeneous illumination for super-resolution localization microscopy with large field-of-view", OPTICS EXPRESS, Bd. 25, Nr. 12, 12. Juni 2017 (2017-06-12) , Seite 13382, XP055648223, US ISSN: 1094-4087, DOI: 10.1364/OE.25.013382
- PIT BINGEN ET AL: "Parallelized STED fluorescence nanoscopy", OPTICS EXPRESS, Bd. 19, Nr. 24, 21. November 2011 (2011-11-21), Seite 23716, XP055034725, ISSN: 1094-4087, DOI: 10.1364/OE.19.023716
- MINKWAN KIM ET AL: "Superresolution imaging with optical fluctuation using speckle patterns illumination", SCIENTIFIC REPORTS, Bd. 5, Nr. 1, 17. November 2015 (2015-11-17), XP055648229, DOI: 10.1038/srep16525

## Beschreibung

### Gebiet der Erfindung

Die Erfindung betrifft ein Verfahren zur hochaufgelösten Fluoreszenzmikroskopie sowie eine Vorrichtung, die in diesem Verfahren verwendet werden kann. Dabei wird eine Probe mit Fluorophoren markiert. Diese Fluorophore werden zur Fluoreszenz angeregt und es werden eine Anzahl von N Einzelbildern aufgenommen, welche zu einem Gesamtbild mit einer höheren strukturellen Auflösung als in den Einzelbildern möglich, verrechnet werden.

### Stand der Technik

Die hochaufgelöste Mikroskopie, vor allem die hochaufgelöste Fluoreszenzmikroskopie hat sich mittlerweile zu einem wesentlichen Hilfsmittel bei der Untersuchung insbesondere lebender Proben entwickelt. Bei der Aufnahme einzelner Bilder besteht hier aufgrund der Beugung eine natürliche Grenze in der Auflösung, die sich beispielsweise bei zentraler Beleuchtung aus dem Verhältnis der verwendeten Beleuchtungswellenlänge zu der numerischen Apertur des Objektivs ergibt. Mittlerweile wurden jedoch einige Verfahren entwickelt, die durch die Erzeugung mehrerer Einzelaufnahmen die Rekonstruktion eines Bildes ermöglichen, dessen Auflösung höher als das ursprünglich von Abbe erstmals erwähnte Auflösungskriterium ist. Dazu zählen beispielsweise konfokale Verfahren und Verfahren, bei denen die Beleuchtung strukturiert wird. Üblicherweise verwenden diese Verfahren Proben, die vor der mikroskopischen Untersuchung mit Fluoreszenzfarbstoffen markiert werden. Bei Beleuchtung der so präparierten Proben mit entsprechenden Anregungswellenlängen werden die Fluoreszenzfarbstoffe, die sogenannten Fluorophore, zur spontanen Emission von Licht angeregt.

Ein bekanntes Verfahren zur hochaufgelösten Fluoreszenzmikroskopie ist das sogenannte STED-Verfahren (*Stimulated-Emission-Depletion-Verfahren*)*.* Dieses Verfahren wird beispielsweise bei S. Hell et al. "Breaking the diffraction resolution limit by stimulated emission: stimulated-emission-depletion fluorescence microscopy", erschienen in Optics Letters 19 (11), 1. Juni 1994, S. 780 ff., beschrieben. Durch gezieltes An- und Abregen der Leuchtmittel, d.h. der Fluorophore, wird es möglich, ein hochaufgelöstes Bild zu rekonstruieren. Dazu wird das Objektfeld zunächst wie in der konfokalen Mikroskopie üblich rasterförmig abgetastet. Aus den einzelnen Aufnahmen lassen sich anschließend die Bilder mit hoher Auflösung zusammensetzen. Nachteilig ist hier zum einen die punktförmige Beleuchtung, d.h. der mit dem rasterförmigen Abtasten verbundene Zeitaufwand. Verfahrenstechnisch bedingt wird außerdem mit einer hohen Laserleistung gearbeitet, um eine möglichst hohe Auflösung zu erreichen. Dies belastet die Probe.

Auf der anderen Seite gibt es Weitfeld-Verfahren, wie beispielsweise lokalisationsmikroskopische Verfahren. In der Weitfeldmikroskopie wird dabei das gesamte Bildfeld gleichzeitig ausgeleuchtet, in dem Gebiet vorhandene Fluorophore werden angeregt und es wird auch das gesamte Bildfeld zur gleichen Zeit detektiert. Bei lokalisationsmikroskopischen Verfahren wird in jedem Bild nur ein geringer Prozentsatz der insgesamt vorhandenen Fluorophore - bzw. allgemeiner Leuchtmittel - in den eigentlichen Detektionsprozess einbezogen, der größte Anteil von Fluorophoren befindet sich in einem Zustand, in welchem sie kein Licht emittieren. Innerhalb der aufgenommenen Bilder werden die Schwerpunkte der einzelnen Fluorophore ermittelt und im Nachgang zu einem hochaufgelösten Bild zusammengesetzt. Da es sich um eine stochastische Verteilung der angeregten Zustände handelt, werden für die Rekonstruktion eines hochaufgelösten Bildes in der Regel mehrere zehntausend Bilder benötigt. Dies wiederum begrenzt die Aufnahmegeschwindigkeit für jeweils ein hochaufgelöstes Bild und erschwert somit die Erfassung von schnellen Prozessen. Bei zu geringen Aufnahmezeiten werden darüber hinaus nur Bilder erzeugt, welche dieselben Strukturinformationen enthalten. Das STORM-Verfahren (*stochastic optical reconstruction microscopy*) ist ein solches lokalisationsmikroskopisches Verfahren, beschrieben beispielsweise in einem Artikel von M. Rust et al., "Sub-diffraction-limit imaging by stochastic optical reconstruction microscopy (STORM)", Nature Methods 3 (2006), S. 793 ff. Um die Übergangswahrscheinlichkeit der Fluorophore bzw. der verwendeten Leuchtmittel in einen Zustand zu erhöhen, in dem sie kein Licht emittieren, werden bei solchen Verfahren oft zusätzliche Chemikalien wie beispielswiese β-Mercaptoethanolamin, verwendet. Diese Chemikalien sind jedoch in den meisten Fällen für lebende Proben toxisch, was die Aufnahme von lebenden Prozessen über einen längeren Zeitraum nahezu unmöglich macht. Des Weiteren wird bei der Lokalisationsmikroskopie mit hohen Laserintensitäten von mehreren kW/cm² auf der Probenoberfläche gearbeitet, welches sowohl schädlich für lebendes Gewebe sein kann, als auch zu einem schnelleren Ausbleichen der Fluorophore führen kann.

T. Dertinger et al. beschreiben in dem Artikel "Fast, background-free, 3Dsuper-resolution optical fluctuation imaging (SOFI)", erschienen in PNAS 106 (52) (2009), S. 22287 ff., ein Verfahren, bei dem ausgenutzt wird, dass das Antwortverhalten der Fluorophore - das sogenannte "Blinkverhalten" - statistisch ist. Das bedeutet, dass nicht alle Fluorophore bei gleichmäßiger Ausleuchtung des Objektvolumens gleichzeitig und / oder gleich stark antworten. Mittels Korrelationsalgorithmen lassen sich hier hochaufgelöste Rekonstruktionsbilder des Objektes erzeugen. Das Blinkverhalten selbst hat dabei eine recht schwache Modulation und die Zeit, in der sich das statistische Verhalten zeigt, ist physikalisch vorgegeben. Damit ist die Aufnahmezeit ebenfalls eingeschränkt.

Während bei den oben beschriebenen Verfahren besondere Eigenschaften der Leuchtmittel, der Fluorophore, ausgenutzt werden, um eine erhöhte Auflösung zu erhalten, sind im Stand der Technik auch Verfahren bekannt, bei denen eine Auflösungserhöhung mittels strukturierter Beleuchtung erzielt wird, wobei die Beleuchtungsstrukturen jeweils bekannt sind. Dabei wird durch Vorwissen über die verwendeten Beleuchtungsstrukturen eine Mehrinformation aus den Aufnahmen gewonnen. Das Verfahren der strukturierten Beleuchtungs-Mikroskopie (SIM) wird beispielsweise in der DE 199 08 883 A1 beschrieben. Durch die Verwendung einer Beleuchtungsstruktur mit bekannten Eigenschaften wird die Aufnahme von Ortsfrequenzen ermöglicht, die im klassischen mikroskopischen Verfahren nicht verwertet werden können. Zu diesem Zweck müssen allerdings die bekannten Strukturen in den Objektraum projiziert werden und anschließend die Aufnahmen durch entsprechende Algorithmen so zerlegt werden, dass die höheren Ortsfrequenzen wieder eindeutig zugeordnet werden können. Ferner können im Objektraum höhere harmonischer Frequenzen erzeugt und kann die Beleuchtungsstruktur somit wesentlich verkleinert werden, was wiederum zu einem Auflösungsgewinn der strukturierten Beleuchtungs-Mikroskopie führt, wie dies z.B. von R. Heintzmann et al. in dem Artikel "Subdiffraction resolution in continuous samples", erschienen in Nature Photonics 3, 362-364 im Jahr 2009 beschrieben wurde.

In Weiterentwicklungen dieser strukturierten Beleuchtungsverfahren können auch nicht bekannte Beleuchtungsstrukturen verwendet werden, wie beispielsweise in einem Artikel von S. Labouesse et al. "Fluorescence blind structured illumination microscopy: A new reconstruction strategy", erschienen in IEEE ICIP 2016, S. 3166 ff., beschrieben wird. Die Auswertung wird hier jedoch aufwendiger als beim SIM-Verfahren mit bekannten Strukturen.

Auch durch eine spezielle Weitfeld-Beleuchtung, die ein nichtlineares Antwortverhalten der Fluorophore hervorruft, lässt sich die Auflösung weiter verbessern. Ein solches Verfahren beschreibt beispielsweise M. Gustafsson et al. im Artikel "Nonlinear structured-illumination microscopy: Wide-field fluorescence imaging with theoretically unlimited resolution", erschienen in PNAS 102 (37), S. 13081 ff. am 13. September 2005. Die Probe wird hierbei mit Licht beleuchtet, dessen Intensität sinusförmig schwankt, wobei die maximale Intensität nahe der Absorptionsfrequenz der Fluorophore liegt. Auch hier wird für die Auswertung ein komplexer Entfaltungsalgorithmus benötigt, um das hochaufgelöste Bild berechnen zu können.

Verwendet man kohärente Lichtquellen, so lässt sich eine strukturierte Beleuchtung auch mit statistischen oder pseudostatistischen Mustern erzeugen. Am leichtesten zu erzeugen sind dabei Speckle-Verteilungen. Diese lassen sich zur Ausleuchtung der Objektebene verwenden. Sie entstehen, in dem kohärentes Licht beispielsweise auf ein streuendes Objekt - beispielsweise eine Streuscheibe, die das Licht entlang seiner Wellenfront mit einer statistischen Phasenverteilung belegt - gelenkt wird. Nach Austritt aus dem streuenden Objekt überlagern sich verschiedene Teilwellen der gestreuten Wellenfront und erzeugen in der Ebene hinter dem streuenden Objekt ein von den Phasendifferenzen der Teilwellen abhängiges Interferenzmuster mit hellen und dunklen Bereichen. Aufgrund ihrer granular wirkenden Beleuchtungsstruktur werden diese Interferenzmuster als Speckle-Muster bezeichnet. Bei der Abbildung des streuenden Objekts hängt die geometrische Größe der dabei entstehenden Speckle, d.h. der Bereiche konstanter Intensität innerhalb des Speckle-Musters, von der numerischen Apertur der verwendeten Abbildungsoptik ab, und je größer die numerische Apertur NA, desto kleiner sind die Speckle. Die Speckle sind also hinsichtlich ihrer geometrischen Ausdehnung beugungsbegrenzt und können daher eine von der für die Beleuchtung verwendeten kohärenten Wellenlänge abhängige minimale Größe nicht unterschreiten.

In einem Artikel von M. Kim et al. "Superresolution imaging with optical fluctuation using speckle patterns illumination", erschienen in Scientific Reports 5 (2015), S. 16525 ff., wird für die Durchführung der oben beschriebenen SOFI-Methode eine Beleuchtung mit Speckle-Mustern verwendet. Dies erlaubt mit vergleichsweise geringem technischen Aufwand auch ohne Verwendung toxischer Chemikalien die Aufnahme von Bildern, welche unter Verwendung bekannter Algorithmen in hochaufgelöste Rekonstruktionsbilder der Proben verrechnet werden können. Höhere Genauigkeiten als etwa ein Viertel der verwendeten Beleuchtungswellenlänge lassen sich mit diesem Verfahren nicht erzielen.

In der US 8,552,402 B2 schließlich wird ein Aufbau beschrieben, bei dem eine Probe nacheinander mit verschiedenen, statistisch erzeugten Speckle-Mustern beleuchtet wird, wobei die Probe mit üblichen Fluoreszenz-Farbstoffen markiert ist. Dabei werden laufend Bilder aufgenommen, und anhand der zeitlichen Änderungen der Intensitäten in jedem Pixel wird mittels entsprechender Auswertealgorithmen ein Bild mit hoher Auflösung rekonstruiert. Die minimale Größe der Speckle-Strukturen steht dabei in einem linearen Zusammenhang mit der kleinsten detektierbaren Objektstruktur. Da die Speckle in ihrer Größe beugungsbegrenzt sind, ist auch die Rekonstruktionsgenauigkeit dieses Verfahrens auf Ausdehnungen von mehr als einem Viertel der verwendeten Beleuchtungswellenlänge begrenzt.

### Beschreibung der Erfindung

Aufgabe der Erfindung ist es daher, ein Verfahren zu entwickeln, welches eine Auflösung von Strukturen kleiner als einem Viertel der verwendeten Beleuchtungswellenlänge ermöglicht, ohne dabei die Probe mit toxischen Chemikalien belasten zu müssen, wobei einerseits die Anzahl der Bilder zur Erzeugung eines Bildes mit hoher Auflösung und andererseits der rechnerische Aufwand zur Erzeugung des rekonstruierten Bildes möglichst gering gehalten werden sollen.

Diese Aufgabe wird durch ein Verfahren zur hochaufgelösten Fluoreszenzmikroskopie gelöst, bei dem eine Anzahl N Einzelbilder einer mit Fluorophoren markierten und zur Fluoreszenz angeregten Probe aufgenommen wird, wobei die Probe nacheinander mit N unterschiedlichen effektiven Beleuchtungsmustern beleuchtet wird, und die Einzelbilder zu einem Gesamtbild mit höherer struktureller Auflösung als in den Einzelbildern verrechnet werden. Das Gesamtbild wird anschließend ausgegeben, d.h. entweder auf einen Bildschirm dargestellt und / oder gespeichert. Ein jedes der effektiven Beleuchtungsmuster wird aus der gleichzeitigen Überlagerung von mindestens zwei räumlich statistsch variierenden Grundbeleuchtungsmustern erzeugt, wobei sich die Grundbeleuchtungsmuster jeweils voneinander und für jedes Einzelbild unterscheiden, d.h. es werden nicht nur für jedes Einzelbild unterschiedliche Grundbeleuchtungsmuster verwendet, sondern diese variieren auch von Einzelbild zu Einzelbild. Dabei werden die Fluorophore in der Probe nur dort, wo sich die mindestens zwei Grundbeleuchtungsmuster der Probe beleuchtend überlagern, zur Fluoreszenz angeregt, in dem die beleuchtende Überlagerung der mindestens zwei Grundbeleuchtungsmuster nichtlineare Anregungs- und / oder Emissionseffekte und / oder Schalteffekte in den Fluorophoren auslöst.

Die Grundbeleuchtungsmuster unterscheiden sich für jedes Einzelbild, d.h. es findet eine Überlagerung von zwei verschiedenen Grundbeleuchtungsmustern statt. Darüber hinaus unterscheiden sich die Grundbeleuchtungsmuster auch von Einzelbild zu Einzelbild. Werden also beispielsweise N Einzelbilder mit je zwei Grundbeleuchtungsmustern aufgenommen, so werden insgesamt 2N verschiedene Grundbeleuchtungsmuster verwendet.

Als Grundbeleuchtungsmuster lassen sich besonders gut Speckle-Muster verwenden. Diese sind während der Aufnahme eines Einzelbildes in der Regel konstant, es können jedoch auch Speckle-Muster verwendet werden, die zeitlich während der Aufnahme eines Einzelbildes variieren. Darüber hinaus ist es auch möglich, mehr als zwei Speckle-Muster in einem Einzelbild zu überlagern, was - je nach verwendeten Fluorophoren und nichtlinearen Prozessen bzw. Effekten - zu einer weiteren Verkleinerung der effektiven Beleuchtungsstruktur führen kann. Zweckmäßig werden dabei die mindestens zwei Grundbeleuchtungsmuster auf die Probe abgebildet und dort zum effektiven Beleuchtungsmuster überlagert, die beiden Grundbeleuchtungsmuster werden also prinzipiell unabhängig voneinander erzeugt und überlagern erst im Objektraum, fokussiert auf die Probe.

Dabei lassen sich verschiedene nichtlineare Anregungs-, Emissions- und / oder Schalteffekte in den Fluorophoren verwenden, diese Effekte können einzeln oder kombiniert mittels des effektiven Beleuchtungsmusters ausgenutzt werden.

Beispielsweise lassen sich Fluorophore verwenden, die nur dann Licht emittieren, wenn sie mit mindestens zwei Photonen oder mehr Photonen derselben und / oder verschiedener Wellenlängen angeregt werden. Je mehr Wellenlängen für die Anregung verwendet werden müssen, desto kleiner ist die effektive Beleuchtungsstruktur und desto stabiler die Auflösung im rekonstruierten Bild. Bei Fluoreszenzanregungen, für die mindestens drei Photonen kombiniert auf das Fluorophor treffen müssen, werden drei verschiedene Grundbeleuchtungsmuster überlagert.

Mit der Verwendung von Nanopartikeln und einigen Fluorophoren lässt sich ebenfalls eine effektive Beleuchtungsstruktur gemäß des oben beschriebenen Verfahrens erzeugen, indem das nichtlineare Antwortverhalten in Abhängigkeit von der Intensität ausgenutzt wird. Dabei wird das Vorwissen verwendet, dass Nanopartikel und einige Fluorophore erst ab einem materialspezifischen Schwellwert an Beleuchtungsintensität selbst Licht als sogenannte Antwort emittieren. Durch eine Verkleinerung des Bereiches, in dem diese Schwellwertintensität in der effektiven Beleuchtungsstruktur anzutreffen ist, steigt die laterale Auflösung. Dies kann erreicht werden, in dem im Großteil von beispielsweise mehr als 95% des ausgeleuchteten Volumens eine geringere Intensität vorliegt und nur in wenigen Bereichen von dann weniger als5% des Objektbereiches eine Intensität größer oder gleich der Schwellwertintensität vorliegt. Diese Bereiche müssen dabei voneinander räumlich ausreichend getrennt sein, um die Verwendung von Auswertealgorithmen zur Verbesserung der Auslösungsgenauigkeit zu ermöglichen.

Auch unter Ausnutzung von Ausbleich- und/oder Sättigungs-Effekten der Fluorophore und Nanopartikel im Objektraum, welche durch die Einstrahlung von Photonen derselben und/oder unterschiedlicher Wellenlängen hervorgerufen werden, lässt sich eine gegenüber dem Grundbeleuchtungsmustern verkleinerte effektive Beleuchtungsstruktur erzeugen, wobei mit einer Verkleinerung gemeint ist, dass die effektiv wirksame, Prozesse auslösende Beleuchtung an weniger Stellen erfolgt, als dies für jedes der reinen Grundbeleuchtungsmuster der Fall wäre. Die effektive Beleuchtungsstruktur wird hier unter Verwendung von Ausbleicheffekten dahingehend beeinflusst, dass innerhalb einer Messreihe Fluorophore in einen ausgeblichenen Zustand überführt werden, welcher auch reversibel sein kann. Somit wird es mit zunehmender Bildanzahl unwahrscheinlicher, schon einmal aktivierte Fluorophore erneut zu aktivieren. Dadurch wird die Wahrscheinlichkeit erhöht, auch dicht benachbarte Fluorophore einzeln zu aktivieren und dadurch darstellbar zu machen, wenn die Bildanzahl angemessen hoch ist, d.h. mehr als 100 Einzelaufnahmen erfolgen. Des Weiteren kann wie bei der STED-Mikroskopie eine stimulierte Ausbleichung des angeregten Zustandes durch ein zusätzliches Beleuchtungsmuster erzwungen werden. Dies führt ebenfalls zu einer Erzeugung eines kleineren effektiven Beleuchtungsmusters. Die Sättigung der Fluorophore lässt sich insofern ausnutzen, als in den Bereichen mit einer Intensität weit größer als die Schwellintensität der Grundzustand der Fluorophore entvölkert wird und diese somit nicht Fluoreszenzprozess teilnehmen können. Dieser Effekt sorgt dafür, dass der effektive Beleuchtungsbereich kleiner wird, da nur noch wenige Fluorophore - in der Regel weniger als 10% - vom Grundzustand anregbar sind.

In einer besonders bevorzugten Variante werden als Leuchtmittel photokonvertierbare und/oder photoschaltbare Fluorophore verwendet, mit denen die Probe zunächst markiert wird. Die photoschaltbaren Fluorophore können mit Aktivierungslicht einer Aktivierungswellenlänge in einen fluoreszenzfähigen Zustand versetzt werden und mit Anregungslicht einer von der Aktivierungswellenlänge verschiedenen Anregungswellenlänge zur Fluoreszenz angeregt werden. Nach erfolgter Markierung wird die Probe daher mit kohärentem Aktivierungslicht beleuchtet, wobei dem Aktivierungslicht als erstes Grundbeleuchtungsmuster ein erstes Aktivierungsmuster aufgeprägt wird. Das erste Aktivierungsmuster wird dann auf die Probe abgebildet, so dass diese - durch das erste Aktivierungsmuster - strukturiert mit Aktivierungslicht beleuchtet wird. Die Struktur umfasst dabei helle und dunkle Bereiche, die sich aufgrund der kohärenten Beleuchtung mittels Interferenz erzeugen lassen. In den hellen Bereichen wird die Probe beleuchtet, in den dunklen nicht.

Gleichzeitig wird die Probe auch mit kohärentem Anregungslicht beleuchtet, wobei dem Anregungslicht als ein zweites Grundbeleuchtungsmuster ein erstes Anregungsmuster, das sich von dem ersten Aktivierungsmuster unterscheidet, aufgeprägt wird. Das erste Anregungsmuster wird dann ebenfalls auf die Probe abgebildet, die Abbildung des ersten Aktivierungsmusters und des ersten Anregungsmusters kann beispielsweise mit Hilfe eines Mikroskopobjektivs erfolgen. Die Probe wird dann ebenfalls strukturiert mit Anregungslicht beleuchtet, auch hier besteht die Struktur aus hellen und dunklen Bereichen, die sich aus dem Interferenzverhalten ergeben.

Das erste Aktivierungsmuster und das erste Anregungsmuster werden also gleichzeitig auf die Probe abgebildet und überlagern sich dabei. Da die beiden Muster verschieden sind, gibt es Bereiche, die nur mit dem ersten Aktivierungsmuster beleuchtet werden, Bereiche, die nur mit dem ersten Anregungsmuster beleuchtet werden, Bereiche, die gar nicht beleuchtet werden, und Bereiche, welche sowohl mit dem ersten Aktivierungsmuster als auch mit dem ersten Anregungsmuster beleuchtet werden, wo also Licht beider Wellenlängen auftrifft. Aufgrund der gewählten photoaktivierbaren Fluorophore emittieren dann nur solche Fluorophore Fluoreszenzsignale, welche gleichzeitig von Aktivierungs- und von Anregungslicht beleuchtet werden, wo sich also beleuchtete Bereiche sowohl des ersten Aktivierungsmusters als auch des ersten Anregungsmusters überlagern. Die Fluoreszenzsignale werden dann auf einen Flächendetektor abgebildet, beispielsweise wieder mit Hilfe des Mikroskopobjektivs, wo sie als Intensitätswerte registriert werden. Aus den registrierten Intensitätswerten wird ein erstes Einzelbild erzeugt. Geht man davon aus, dass das erste Aktivierungsmuster und das erste Anregungsmuster beide einen Bereich gleich großer Fläche beleuchten und dass der Anteil von beleuchteten und unbeleuchteten Teilbereichen für jedes Muster etwa gleich ist, so ist in der Überlagerung der Muster, die sich voneinander unterscheiden, derjenige Anteil des Bereichs, der von beiden Mustern gleichzeitig beleuchtet wird, kleiner als die einzelnen Teile bzw. Bereiche. Insgesamt werden also weniger Fluorophore zur Fluoreszenz angeregt, d.h. die effektive Beleuchtungsstruktur verkleinert gegenüber den einzelnen Mustern.

Nach der Aufnahme eines Einzelbildes wird mindestens die Beleuchtung mit Aktivierungslicht unterbrochen, bis der überwiegende Teil der Fluorophore in einen nicht aktivierten Grundzustand übergegangen ist. Unter dem überwiegenden Anteil wird dabei verstanden, dass mindestens zwei Drittel der Fluorophore, bevorzugt 80%, besonders bevorzugt aber mindestens 95 % der Fluorophore wieder in den Grundzustand, in dem sie nicht aktiviert sind, übergegangen sind. Anschließend wird ein weiteres, zweites Aktivierungsmuster ausgewählt und ein weiteres zweites Anregungsmuster, welche sich ebenfalls voneinander und von den zuvor verwendeten Mustern unterscheiden. Mit diesen zweiten Mustern werden die Schritte zur Aufnahme eines Einzelbildes wiederholt. Dieser Vorgang wird sooft mit weiteren Mustern wiederholt, bis eine genügend große Anzahl von Einzelbildern aufgenommen wurde, aus denen dann das Gesamtbild mit höherer struktureller Auflösung als in den Einzelbildern berechnet wird.

Die effektive Beleuchtungsstruktur lässt sich weiter verkleinern, wenn die beiden Bereiche, die die Aktivierungs- und Anregungsmuster in der Fläche der Probe einnehmen, sich nur geringfügig überlappen, also eine Schnittmenge von weniger als 50 %, bevorzugt weniger als 20 %, 10% oder 5% haben. Das Gebiet, in dem eine Beleuchtungsüberlagerung stattfindet, wird auf diese Weise noch weiter verkleinert.

Als Aktivierungs- und Anregungsmuster lassen sich die bereits oben beschriebenen Speckle-Muster besonders gut verwenden, da es sich um statistische Muster handelt und auf diese Weise sichergestellt ist, dass auch das Überlagerungsmuster statistisch ist. Die Speckle-Muster können besonders einfach mit einer Streuscheibe erzeugt werden. Zur Erzeugung des ersten Aktivierungsmusters und des ersten Anregungsmusters wird dabei bevorzugt derselbe Bereich einer Streuscheibe im Beleuchtungsstrahlengang beleuchtet. Die Streuscheibe wird in die Eintrittspupille eines Mikroskopobjektivs und von dort auf die Probe abgebildet. Zur Erzeugung der weiteren Aktivierungs- und Anregungsmuster wird die Streuscheibe um eine optische Achse gedreht oder lateral zu dieser verschoben, wobei darauf geachtet werden sollte, dass die räumliche Korrelation zwischen den jeweils erzeugten Speckle-Mustern minimal ist. Bevorzugt sollten also für die den jeweiligen Einzelbildern zugeordneten, verschiedenen Aktivierungs- bzw. Anregungsmuster Bereiche der Streuscheibe verwendet werden, die sich nicht überlappen.

Die Eintrittspupille des Mikroskopobjektivs sollte dabei möglichst vollständig ausgeleuchtet werden, um die Ausdehnung der Speckle in der Probenebene lateral möglichst gering zu halten.

Die Erfindung betrifft auch eine Vorrichtung zur hochaufgelösten Fluoreszenzmikroskopie an einer mit Fluorophoren markierten Probe, wobei die Fluorophore durch nichtlineare Anregungs- und/oder Emissionsprozesse, und/oder durch Schaltprozesse zur Fluoreszenz anregbar sind. Eine solche Vorrichtung umfasst Beleuchtungsmittel sowie Mustererzeugungsmittel, mit welchen bei Beleuchtung mit den Beleuchtungsmitteln gleichzeitig mindestens zwei verschiedene, räumlich statistisch variierende Grundbeleuchtungsmuster erzeugt werden. Die Vorrichtung umfasst außerdem ein Mikroskopobjektiv, mit welchem die Grundbeleuchtungsmuster auf die Probe abgebildet und zu einem effektiven Beleuchtungsmuster überlagert werden, sowie Detektionsmittel mit einem Flächensensor, auf welchen von der Probe emittierte Fluoreszenzsignale mittels des Mikroskopobjektivs abgebildet werden und als Einzelbild detektiert werden. Schließlich umfasst die Vorrichtung auch Mittel zur Variation der mindestens zwei Grundbeleuchtungsmuster mindestens zwischen zwei Aufnahmen von Einzelbildern sowie Auswertemittel zur Verrechnung mehrerer - der aufgenommenen - Einzelbilder zu einem Gesamtbild. Die Vorrichtung ist insbesondere zur Durchführung eines erfindungsgemäßen Verfahrens geeignet. Zur Verrechnung der Einzelbilder kann in die Auswertemittel ein entsprechender Algorithmus implementiert sein, wie er beispielsweise von J. Min in dem Artikel "Fluorescent microscopy beyond diffraction limits using speckle illumination and joint support recovery", erschienen in Scientific Reports 3, S. 2075 im Jahr 2013 beschrieben wurde. Insgesamt ist die Aufnahme von 50 bis 300 unterschiedlich ausgeleuchteten Bildern der Probe ausreichend.

Die Mustererzeugungsmittel umfassen bevorzugt einen Speckle-Generator. Dieser kann eine Streuscheibe umfassen, welche zur Variation der Grundbeleuchtungsmuster um eine optische Achse rotiert oder senkrecht zu dieser verschoben werden kann. Alternativ oder ergänzend lassen sich die Speckle aber auch auf andere Weise erzeugen, beispielsweise mit einem LCOS-Bauelement (Flüssigkristall auf Silizium), einem diffraktiven optischen Element (DOE), einem mikroelektro-mechanischem System (MEMS) oder einem akustooptischen Modulator (AOM), oder beliebigen optisch rauen Oberflächen, bei denen die Rauigkeit größer als die Wellenlänge des verwendeten Beleuchtungslichts ist. Elektrisch ansteuerbare Elemente können so angesteuert werden, dass sie pseudostatistische Muster erzeugen, was den Vorteil einer besseren Reproduzierbarkeit hat.

Die Beleuchtungsmittel umfassen bevorzugt Lichtquellen, die kohärentes Licht zweier Wellenlängen abstrahlend ausgebildet sind. Verwendet man photoschaltbare Fluorophore zur Markierung, so regt das Licht der beiden Wellenlängen in dem Überlappungs-Bereich, also im effektiven Beleuchtungsmuster, wo sich die mindestens zwei Grundbeleuchtungsmuster beleuchtend überlagern, die Fluorophore zur Fluoreszenz an. Vorteilhaft ist es außerdem, wenn die Vorrichtung Unterbrechungsmittel zur Unterbrechung der Beleuchtung der Probe für einen vorgegebenen Zeitraum im unteren Millisekundenbereich von weniger als 400 ms, bevorzugt weniger als 100 ms zwischen den Aufnahmen zweier Einzelbilder umfasst, um den Fluorophoren die Möglichkeit zu geben, in einen nicht-aktiven Grundzustand überzugehen, bevor sie gegebenenfalls erneut mit einem Aktivierungsmuster beleuchtet werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung beispielsweise anhand der beigefügten Zeichnungen, die auch erfindungswesentliche Merkmale offenbaren, noch näher erläutert. Es zeigen:
- Fig. 1: den Aufbau einer Vorrichtung zur hochaufgelösten Fluoreszenzmikroskopie,
- Fig. 2A)-C): die Funktionsweise photoschaltbarer Fluorophore und
- Fig. 3: das Funktionsprinzip für die Aufnahme hochaufgelöster Bilder.

### Ausführliche Beschreibung der Zeichnungen

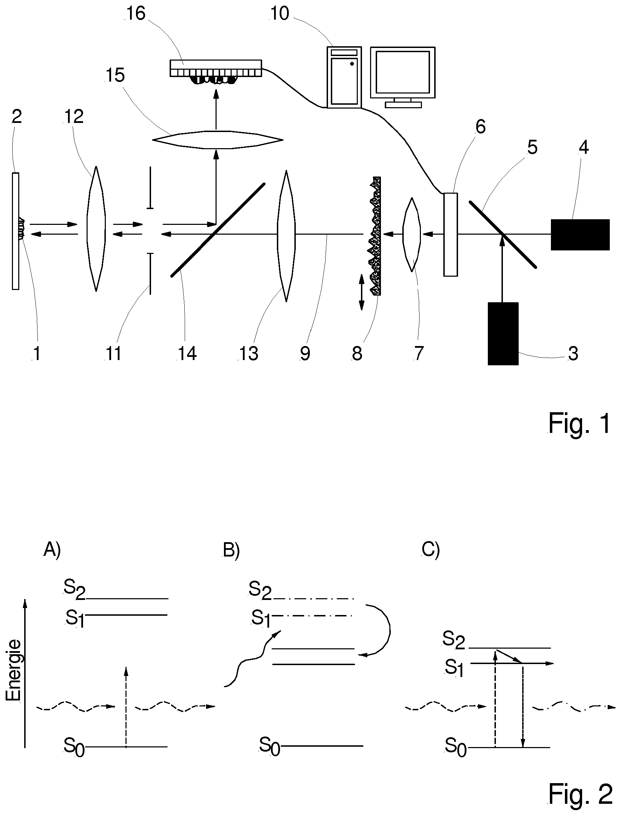

Fig. 1 zeigt zunächst eine Vorrichtung, mit der ein Verfahren zur hochaufgelösten Fluoreszenzmikroskopie durchgeführt werden kann. Bei dem hier gezeigten Ausführungsbeispiel wird eine Probe 1, welche auf einem Objektträger 2 angeordnet ist, zunächst mit photoschaltbaren Fluorophoren markiert. Die Vorrichtung umfasst als Beleuchtungsmittel zwei kohärente Lichtquellen, einen Aktivierungslaser 3 und einen Anregungslaser 4. Der Aktivierungslaser 3 strahlt Aktivierungslicht einer Aktivierungswellenlänge ab, mit welchem die Fluorophore in einem fluoreszenzfähigen Zustand versetzt werden können. Der Anregungslaser 4 strahlt Anregungslicht einer von der Aktivierungswellenlänge verschiedene Anregungswellenlänge ab, mit dieser Anregungswellenlänge können die Fluorophore, nachdem sie aktiviert wurden, in einem fluoreszenzfähigen Zustand versetzt werden. Anstelle zweier verschiedener Laser kann auch eine Breitbandlichtquelle verwendet werden, die mit entsprechenden Filtern ausgestattet ist.

Die Funktionsweise der photoschaltbaren Fluorophore wird im Zusammenhang mit Fig. 2 näher erläutert, welches die Energieniveaus eines solchen Fluorophors zeigt. Im deaktivierten Grundzustand, in Fig. 2A) gezeigt, kann durch Beleuchtung mit Licht der Anregungswellenlänge, also mit Anregungslicht, die Energielücke zwischen dem Grundzustand S₀ und dem angeregten Zustand S₁ bzw. S₂ nicht überwunden werden, die Energie wird nicht absorbiert und Fluoreszenz ist nicht möglich. Licht der Anregungswellenlänge und die Anregungsenergie sind hier durch Pfeile mit gestrichelten Linien dargestellt. Bestrahlt man die Fluorophormoleküle jedoch mit Aktivierungslicht der Aktivierungswellenlänge wie es in Fig. 2B) gezeigt ist, so verändert sich die Molekülstruktur des Fluorophors und damit das Energieniveauschema. Die beiden Anregungsniveaus S₁ und S₂ weisen nun einen geringeren energetischen Abstand zum Grundzustand S₀ auf. Licht der Aktivierungswellenlänge ist mit dem durchgezogenen, geschlängelten Pfeil gekennzeichnet, die Aktivierungswellenlänge ist meist kürzer als die Anregungswellenlänge. Wird das Fluorophor nun mit Anregungslicht der Anregungswellenlänge bestrahlt, wie in Fig. 2C) gezeigt, so wird Licht dieser Wellenlänge nun absorbiert. Mittels einer Schwingungsrelaxation zwischen den angeregten Zuständen S₂ und S₁ sowie durch den anschließenden Fluoreszenzprozess zwischen dem angeregten Zustand S₁ und dem Grundzustand S₀ kehrt das Fluoreszenzfarbstoffmolekül in den Grundzustand S₀ zurück, nachdem es Licht der Fluoreszenzwellenlänge, hier durch die punktgestrichelte Linie gekennzeichnet, emittiert hat.

Zur Erzeugung eines hoch aufgelösten Fluoreszenzbildes werden einer Anzahl N Einzelbilder der mit den Fluorophoren markierten und zur Fluoreszenz angeregten Probe aufgenommen. Die Probe wird dabei nacheinander mit N unterschiedlichen effektiven Beleuchtungsmustern beleuchtet, die Einzelbilder werden dann zu einem Gesamtbild mit höherer struktureller Auflösung als in den Einzelbildern verrechnet. Das Gesamtbild kann anschließend ausgelesen werden. Jedes der effektiven Beleuchtungsmuster wird aus der Überlagerung von mindestens zwei Grundbeleuchtungsmustern erzeugt, wobei sich die Grundbeleuchtungsmuster jeweils voneinander und für jedes Einzelbild unterscheiden - unter dieser Bedingung ist es prinzipiell auch möglich, Aktivierungswellenlänge und Anregungswellenlänge gleich zu wählen, sofern die Fluorophore entsprechend ausgelegt sind.

Im vorliegenden Beispiel wird die Probe 1 zum einen mit kohärentem Aktivierungslicht des Aktivierungslasers 3 beleuchtet, wobei dem Aktivierungslicht als erstes Grundbeleuchtungsmuster ein erstes Aktivierungsmuster aufgeprägt wird, welches auf die Probe abgebildet wird, so dass diese strukturiert mit Aktivierungslicht beleuchtet wird. Gleichzeitig wird die Probe 1 mit kohärentem Anregungslicht des Anregungslasers 4 beleuchtet, wobei dem Anregungslicht als ein zweites Grundbeleuchtungsmuster ein erstes Anregungsmuster, das sich von dem ersten Aktivierungsmuster unterscheidet, aufgeprägt wird. Dazu wird im vorliegenden, in Fig. 1 gezeigten Beispiel das Licht des Aktivierungslasers 3 und des Anregungslasers 4 über einen dichroitischen Strahlteiler 5, einen akustooptischen Filter 6 sowie eine Linse 7 auf eine Streuscheibe 8 gelenkt, welche in Bezug auf eine optische Achse 9 senkrecht zu dieser lateral verschiebbar und/oder um diese rotierbar angeordnet ist. Als Fluoreszenzfarbstoff lässt sich beispielsweise FLIP 565 der Firma Abberior GmbH verwenden, die Wellenlänge für die Aktivierung beträgt dann 375 nm und die Wellenlänge für die Anregung 561 nm.

Vor Beginn der Aufnahme eines Einzelbildes wird der akustooptische Filter 6, welcher durch einen Computer 10 angesteuert wird, so geschaltet, dass ein Bereich der Streuscheibe kohärent ausgeleuchtet wird, und zwar sowohl mit Licht der Aktivierungswellenlänge als auch mit Licht der Anregungswellenlänge. Der Bereich auf der Streuscheibe sollte nicht so groß sein, dass er die gesamte Streuscheibe einnimmt, sondern im Gegensatz dazu möglichst klein, um die räumliche Korrelation zwischen verschiedenen Einzelbilden möglichst gering zu halten, die umso größer ist, je mehr Bereiche der Streuscheibe in zwei oder mehr Bildern auftauchen. Außerdem sollte die Ausleuchtung der Streuscheibe 8 so erfolgen, dass die Eintrittspupille 11 eines Mikroskopobjektivs 12 möglichst vollständig ausgeleuchtet ist, so dass die erzeugten Speckle in der Probenebene eine minimale Ausdehnung aufweisen, d.h. beugungsbegrenzt sind.

Aufgrund der zwei verschiedenen Wellenlängen des Laserlichts entstehen in der Ebene der Probe 1 zwei verschiedene, räumlich statistisch variierende Beleuchtungsstrukturen, welche in Bezug aufeinander inkohärent sind, auch wenn die gleichen Bereiche der Streuscheibe beleuchtet werden. Durch die Beleuchtung mit dem Aktivierungsmuster, welches durch das Aktivierungslicht des Aktivierungslasers 3 erzeugt wird, werden die Fluorophore in der Probe 1 räumlich statistisch variierend in einen fluoreszenzfähigen Zustand versetzt. Aufgrund des gleichzeitig durch das Laserlicht des Anregungslasers 4 erzeugten Anregungsmusters werden die fluoreszenzfähigen Fluorophore, ebenfalls räumlich statistisch variierend, zur Fluoreszenz angeregt. Jedoch werden nur solche Fluorophore zur Emission von Fluoreszenzsignalen angeregt und diese emittieren, welche gleichzeitig von Aktivierungs- und von Anregungslicht beleuchtet werden, wo sich also die zwei Grundbeleuchtungsmuster die Probe 1 beleuchtend überlagern. Die Beleuchtungsmuster werden mittels eines optischen Systems 13 in die Eintrittspupille 11 des Mikroskopobjektivs 12 abgebildet. Das von der Probe emittierte Fluoreszenzlicht wird mit Hilfe des Mikroskopobjektivs 12, einem weiteren dichroitischen Strahlteiler 14, welcher das Fluoreszenzlicht vom Beleuchtungslicht trennt, sowie einer Tubuslinse 15 auf einen Flächendetektor 16, beispielsweise als Teil einer EMCCD-Kamera, abgebildet. Das mit dem Flächendetektor 16 detektierte Fluoreszenzlicht, welches in Form von Intensitätswerten registriert wird, wird mittels des Computers 10 zu einem Einzelbild verarbeitet.

Nach der Aufnahme des ersten Einzelbildes und nach Aufnahme jedes weiteren Einzelbildes wird der akustooptische Filter 6 so geschaltet, dass kein Aktivierungslicht und kein Anregungslicht die Probe 1 erreicht. Dieser Zustand wird solange aufrechterhalten, bis hinreichend viele, d.h. mehr als zwei Drittel oder besser mehr als 80% der Fluorophore in den nicht-fluoreszenzfähigen Grundzustand zurückgekehrt sind. Währenddessen wird die Streuscheibe 8 in eine andere Position gebracht, beispielsweise durch einen Schrittmotor, wie hier durch den Doppelpfeil angedeutet. Anschließend wird die Probe 1 wie zuvor beschrieben beleuchtet. Es entstehen jedoch nun andere Aktivierungs- und Anregungsmuster, die sich von den zuvor verwendeten Mustern unterscheiden und auch voneinander, da die Muster mit verschiedenen Wellenlängen erzeugt werden, auch wenn der gleiche Bereich beleuchtet wird. Insgesamt führt dies zu einer räumlich statistisch variierenden Fluoreszenz in der Probe 1, welche sich von der zuvor aufgenommenen Fluoreszenz unterscheidet. Es wird ein weiteres Einzelbild aufgenommen, und nach der Aufnahme von insgesamt N Bildern - wobei N beispielsweise zwischen 50 und 300 liegen kann - der jeweils unterschiedlich räumlich statistisch variierend ausgeleuchteten Probe 1 wird durch einen Auswertealgorithmus, wie er vorhin beispielhaft genannt wurde, ein hochaufgelöstes Bild der Probe 1 berechnet und auf einem Bildschirm des Computers 10 dargestellt.

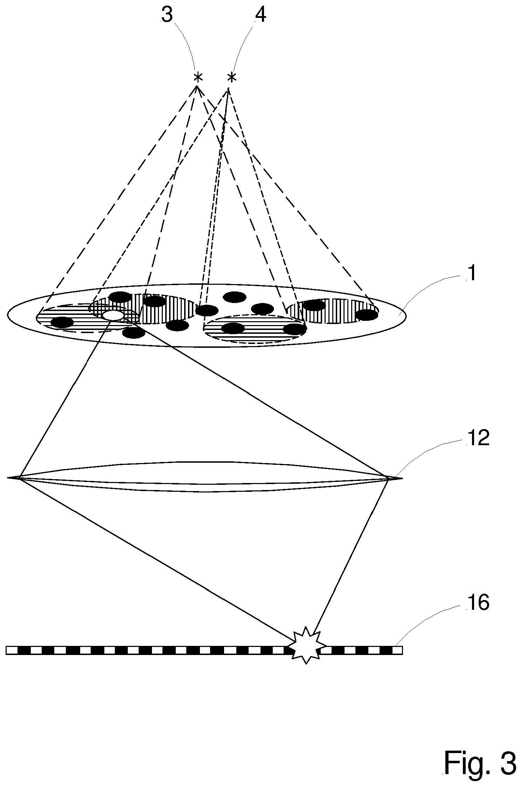

Das Funktionsprinzip der Mustererzeugung wird anhand von Fig. 3 noch näher erläutert. Aufgrund der Struktur des - in Fig. 3 mit horizontaler Schraffur dargestellten - Aktivierungsmusters des Lasers 3, eines Speckle-Musters, werden nur vereinzelt Fluoreszenzmoleküle in der Probe in einen fluoreszenzfähigen Zustand versetzt. Das durch das Licht des Anregungslasers 4 erzeugte - in Fig. 3 mit vertikaler Schraffur dargestellte - Anregungsmuster, ein zweites Speckle-Beleuchtungsmuster, besitzt eine andere, statistisch ebenfalls räumlich variierende Struktur, weshalb nur ein Teil der fluoreszenzfähigen Fluoreszenzmoleküle zur Fluoreszenz angeregt werden kann. Der Raumbereich in der Probe 1, aus welchem nach der Abbildung durch das Mikroskopobjektiv 12 auf den Flächendetektor 16 Fluoreszenzlicht detektiert werden kann, ergibt sich aus dem - in Fig. 3 horizontal und vertikal schraffierten - Überlappungsbereich der durch das Aktivierungsmuster und das Anregungsmuster gleichzeitig beleuchteten Bereiche, im in Fig. 3 gezeigten Beispiel befindet sich dort nur ein einziges Fluorophor, welches mit einem weißen Kreis gekennzeichnet ist. Nur in diesem Bereich, dem Überlappungsbereich, werden die Fluorophore tatsächlich aktiviert und gleichzeitig zur Fluoreszenz angeregt. Der Fluoreszenzbereich, der Überlappungsbereich, ist in der Regel kleiner, als die Größe der zur Beleuchtung verwendeten Speckle-Muster. Dies führt zu einer kleineren, effektiven Beleuchtungsstruktur in der Probe 1, als sie mit einer konventionellen, beugungsbegrenzten, strukturierten Beleuchtung möglich ist.

### Bezugszeichenliste

- 1: Probe
- 2: Objektträger
- 3: Aktivierungslaser
- 4: Anregungslaser
- 5: dichroitischer Strahlteiler
- 6: akustooptischer Filter
- 7: Linse
- 8: Streuscheibe
- 9: optische Achse
- 10: Computer
- 11: Eintrittspupille
- 12: Mikroskopobjektiv
- 13: optisches System
- 14: dichroitischer Strahlteiler
- 15: Tubuslinse
- 16: Flächendetektor

## Patentansprüche

1. Verfahren zur hochaufgelösten Fluoreszenzmikroskopie, bei dem
- eine Anzahl N Einzelbilder einer mit Fluorophoren markierten und zur Fluoreszenz angeregten Probe (1) aufgenommen wird, wobei die Probe (1) nacheinander mit N unterschiedlichen, effektiven Beleuchtungsmustern beleuchtet wird, und die Einzelbilder zu einem Gesamtbild mit höherer struktureller Auflösung als in den Einzelbildern verrechnet werden, und das Gesamtbild anschließend ausgegeben wird,
- wobei ein jedes effektives Beleuchtungsmuster aus der gleichzeitigen Überlagerung von mindestens zwei Grundbeleuchtungsmustern erzeugt wird, wobei die Grundbeleuchtungsmuster räumlich statistisch variieren und sich jeweils voneinander und für jedes Einzelbild unterscheiden, und
- wobei die Fluorophore in der Probe (1) nur dort, wo sich die mindestens zwei Grundbeleuchtungsmuster die Probe (1) beleuchtend überlagern, zur Fluoreszenz angeregt werden, indem die beleuchtende Überlagerung der mindestens zwei Grundbeleuchtungsmuster nichtlineare Anregungs- und/oder Emissionseffekte und/oder Schalteffekte in den Fluorophoren auslöst.

2. Verfahren nach Anspruch 1, **dadurch gekennzeichnet, dass** die Grundbeleuchtungsmuster als sogenannte Speckle-Muster erzeugt werden.

3. Verfahren nach Anspruch 2, **dadurch gekennzeichnet, dass** sich die Speckle-Muster während der Aufnahme eines Einzelbildes verändern.

4. Verfahren nach einem der Ansprüche 1 bis 3, **dadurch gekennzeichnet, dass** die mindestens zwei Grundbeleuchtungsmuster auf die Probe (1) abgebildet und dort zum effektiven Beleuchtungsmuster überlagert werden.

5. Verfahren zur hochaufgelösten Fluoreszenzmikroskopie nach einem der Ansprüche 1 bis 4, bei dem
- die Probe (1) mit photoschaltbaren Fluorophoren markiert wird, welche mit Aktivierungslicht einer Aktivierungswellenlänge in einen fluoreszenzfähigen Zustand versetzt werden können und mit Anregungslicht einer von der Aktivierungswellenlänge verschiedenen Anregungswellenlänge zur Fluoreszenz angeregt werden können,
a. die Probe (1) mit kohärentem Aktivierungslicht beleuchtet wird, wobei dem Aktivierungslicht als erstes Grundbeleuchtungsmuster ein erstes Aktivierungsmuster aufgeprägt wird, und das erste Aktivierungsmuster auf die Probe (1) abgebildet wird, so dass diese strukturiert mit Aktivierungslicht beleuchtet wird, und gleichzeitig
b. die Probe (1) mit kohärentem Anregungslicht beleuchtet wird, wobei dem Anregungslicht als ein zweites Grundbeleuchtungsmuster ein erstes Anregungsmuster, dass sich von dem ersten Aktivierungsmuster unterscheidet, aufgeprägt wird, und das erste Anregungsmuster über ein Mikroskopobjektiv (12) auf die Probe (1) abgebildet wird, so dass diese strukturiert mit Anregungslicht beleuchtet wird, so dass nur solche Fluorophore Fluoreszenzsignale emittieren, welche gleichzeitig von Aktivierungs- und von Anregungslicht beleuchtet werden,
c. die Fluoreszenzsignale auf einen Flächendetektor (16) abgebildet und als Intensitätswerte registriert werden, und aus den registrierten Intensitätswerten ein erstes Einzelbild erzeugt wird,
d. die Beleuchtung mindestens mit Aktivierungslicht unterbrochen wird, bis der überwiegende Teil der Fluorophore in einen nicht aktivierten Grundzustand übergegangen ist,
- die Schritte a. bis d. mit weiteren Aktivierungsmustern und weiteren Anregungsmustern, die sich jeweils voneinander unterscheiden, wiederholt werden und weitere Einzelbilder erzeugt werden.

6. Verfahren nach Anspruch 5, **dadurch gekennzeichnet, dass** zur Erzeugung des ersten Aktivierungsmusters und des ersten Anregungsmusters jeweils derselbe Bereich einer Streuscheibe (8) im Beleuchtungsstrahlengang beleuchtet wird, welche in eine Eintrittspupille eines Mikroskopobjektivs (12) und von dort auf die Probe (1) abgebildet wird, und zur Erzeugung der weiteren Aktivierungs- und Anregungsmuster die Streuscheibe (8) um eine optische Achse (9) gedreht oder lateral zu dieser verschoben wird.

7. Vorrichtung zur hochaufgelösten Fluoreszenzmikroskopie an einer mit Fluorophoren markierten Probe (1), wobei die Fluorophore durch nichtlineare Prozesse oder durch Schaltprozesse zur Fluoreszenz anregbar sind, umfassend,
- Beleuchtungsmittel,
- Mustererzeugungsmittel, mit welchen bei Beleuchtung mit den Beleuchtungsmitteln gleichzeitig mindestens zwei verschiedene, räumlich statistisch variierende Grundbeleuchtungsmuster erzeugt werden,
- ein Mikroskopobjektiv (12), mit welchem die Grundbeleuchtungsmuster auf die Probe (1) abgebildet und zu einem effektiven Beleuchtungsmuster überlagert werden,
- Detektionsmittel mit einem Flächendetektor (16), auf welchen von der Probe (1) emittierte Fluoreszenzsignale mittels des Mikroskopobjektivs (12) abgebildet werden und als Einzelbild detektiert werden,
- Mittel zur Variation der mindestens zwei Grundbeleuchtungsmuster mindestens zwischen zwei Aufnahmen von Einzelbildern, und
- Auswertemittel zur Verrechnung mehrerer Einzelbilder zu einem Gesamtbild.

8. Vorrichtung nach Anspruch 7, **dadurch gekennzeichnet, dass** die Mustererzeugungsmittel einen Speckle-Generator umfassen.

9. Vorrichtung nach Anspruch 8, **dadurch gekennzeichnet, dass** der Speckle-Generator LCOS, DOE, MEMS, AOM, mindestens eine Streuscheibe (8), und/oder mindestens ein Objekt mit einer optisch rauen Oberfläche mit einer Rauigkeit größer als die größte Wellenlänge des von den Beleuchtungsmitteln abgestrahlten Lichts, umfasst.

10. Vorrichtung nach Anspruch 8 oder 9, bei der der Speckle-Generator eine Streuscheibe (8) umfasst, welche zur Variation der Grundbeleuchtungsmuster um eine optische Achse (9) rotiert oder senkrecht zu dieser verschoben werden kann.

11. Vorrichtung nach einem der Ansprüche 7 bis 10, bei der die Beleuchtungsmittel kohärentes Licht zweier Wellenlängen abstrahlend ausgebildet sind, welche in Zusammenwirkung im effektiven Beleuchtungsmuster, dort, wo sich die mindestens zwei Grundbeleuchtungsmuster beleuchtend überlagern, die Fluorophore zur Fluoreszenz anregen.

12. Vorrichtung nach einem der Ansprüche 7 bis 11, umfassend Unterbrechungsmittel zur Unterbrechung der Beleuchtung der Probe (1) für einen vorgegebenen Zeitraum zwischen den Aufnahmen zweier Einzelbilder.

## Claims

1. A method for high-resolution fluorescence microscopy, wherein
- a number of N partial images of a specimen (1) marked by fluorophores and excited to emit fluorescence is recorded, wherein the specimen (1) is successively illuminated by N different effective illuminating patterns, a composite image is calculated from the partial images, the composite image having a higher structural resolution than the partial images, and the composite image is finally output,
- wherein each effective illuminating pattern is generated from the superimposition of at least two basic illuminating patterns, with the basic illuminating patterns varying statistically in space and differing from each other and for each partial image, and
- wherein the fluorophores contained in the specimen (1) are excited to emit fluorescence only where the at least two basic illuminating patterns superimpose to illuminate the specimen (1), with the illuminating superimposition of the at least two basic illuminating patterns triggering off non-linear excitation and/or emission effects and/or switching effects in the fluorophores.

2. The method as claimed in Claim 1, **characterized in that** the basic illuminating patterns are generated as speckle patterns.

3. The method as claimed in Claim 2, **characterized in that** the speckle patterns change during the recording of a partial image.

4. The method as claimed in any of Claims 1 through 3, **characterized in that** the at least two basic illuminating patterns are projected onto the specimen (1) and there get superimposed to form the effective illuminating pattern.

5. The method for high-resolution fluorescence microscopy as claimed in any of Claims 1 through 4, wherein
- the specimen (1) is marked by photoswitchable fluorophores, which can, with activating light of an activation wavelength, be put into a state capable of emitting fluorescence, and which can, with excitation light of an excitation wavelength that differs from the activation wavelength, be excited to emit fluorescence,
a. the specimen (1) is illuminated by coherent activating light, wherein the activating light as the first basic illuminating pattern gets a first activation pattern imparted to it, and the first activation pattern is projected onto the specimen (1), so that this is illuminated by activating light in a structured mode, and simultaneously
b. the specimen (1) is illuminated by coherent excitation light, wherein the excitation light as a second basic illuminating pattern gets a first excitation pattern differing from the first activation pattern imparted to it, and the first excitation pattern is projected onto the specimen (1) via a microscope objective (12), so that the specimen is illuminated by excitation light in a structured mode, for which reason fluorescence signals are emitted by such fluorophores only that are simultaneously illuminated by activation and excitation light,
c. the fluorescence signals are projected onto a flat-panel area detector (16) and recorded as intensity levels, from which a first partial image is generated,
d. the illumination is interrupted at least with activating light until the predominating share of the fluorophores has passed into a non-activated ground state,
- the steps a through d are repeated with further activation patterns and further excitation patterns differing from each other, and further partial images are generated.

6. The method as claimed in Claim 5, **characterized in that**, for generating the first activation pattern and the first excitation pattern, in each case the same region of a diffuser disk (8) in the illuminating ray path is illuminated, with the diffuser disk (8) being projected into an entrance pupil of a microscope objective (12) and from there onto the specimen (1), and that, for generating the further activation and excitation patterns, the diffuser disk (8) is rotated about an optical axis (9) or shifted laterally relative to this axis.

7. A device for high-resolution fluorescence microscopy applied to a specimen marked by fluorophores (1), wherein the fluorophores can, by non-linear processes or switching processes, be excited to emit fluorescence, comprising,
- illuminating means,
- pattern generating means, with which, when they are illuminated by the illuminating means, at least two different basic illuminating patterns, which vary statistically in space, can be generated simultaneously,
- a microscope objective (12), by means of which the basic illuminating patterns are projected onto the specimen (1) and superimposed to form an effective illuminating pattern,
- detection means with a flat-panel area detector (16), on which fluorescence signals emitted by the specimen (1) are projected by means of the microscope objective (12) and detected as a partial image,
- means for varying the at least two basic illuminating patterns at least between two recordings of partial images, and
- analyzing means for computing a composite image from a number of partial images.

8. The device as claimed in Claim 7, **characterized in that** the pattern generating means comprise a speckle generator.

9. The device as claimed in Claim 8, **characterized in that** the speckle generator comprises LCOSs, DOEs, MEMSs, AOMs, at least one diffuser disk (8), and/or at least one object having an optically rough surface with a roughness greater than the longest wavelength of the light radiated by the illuminating means.

10. The device as claimed in Claim 8 or 9, wherein the speckle generator comprises a diffuser disk (8), which, for varying the basic illuminating patterns, can be rotated about an optical axis (9) or shifted perpendicularly to this axis.

11. The device as claimed in any one of Claims 7 through 10, wherein the illuminating means are adapted to radiate coherent light of two wavelengths, which in interaction with the effective illuminating pattern excite the fluorophores to emit fluorescence where the at least two basic illumination patterns superimpose to effect illumination.

12. The device as claimed in any one of Claims 7 through 11, comprising interruption means for interrupting the illumination of the specimen (1) for a specified period between the recordings of two partial images.

## Revendications

1. Procédé de microscopie à fluorescence haute résolution, dans lequel
- un nombre N d'images individuelles d'un échantillon (1) marqué avec des fluorophores et excité en fluorescence est enregistré, l'échantillon (1) étant éclairé successivement avec N motifs d'éclairage effectifs différents, et les images individuelles sont utilisées pour calculer une image globale avec une résolution structurelle plus élevée que dans les images individuelles, et l'image globale est ensuite sortie,
- chaque motif d'éclairage effectif est généré à partir de la superposition simultanée d'au moins deux motifs d'éclairage de base, les motifs d'éclairage de base variant statistiquement dans l'espace et étant différents les uns des autres et pour chaque image individuelle, et
- les fluorophores dans l'échantillon (1) ne sont excités en fluorescence que là où les au moins deux motifs d'éclairage de base se superposent en éclairant l'échantillon (1), en ce que la superposition éclairante des au moins deux motifs d'éclairage de base déclenche des effets d'excitation et/ou d'émission non linéaires et/ou des effets de commutation dans les fluorophores.

2. Procédé selon la revendication 1, **caractérisé en ce que** les motifs d'éclairage de base sont générés sous forme de motifs dits "speckle".

3. Procédé selon la revendication 2, **caractérisé en ce que** les motifs de speckle changent pendant l'enregistrement d'une image individuelle.

4. Procédé selon l'une quelconque des revendications 1 à 3, **caractérisé en ce que** les au moins deux motifs d'éclairage de base sont reproduits sur l'échantillon (1) et y sont superposés pour former le motif d'éclairage effectif.

5. Procédé de microscopie à fluorescence haute résolution selon l'une quelconque des revendications 1 à 4, dans lequel
- l'échantillon (1) est marqué avec des fluorophores photocommutables qui peuvent être mis dans un état fluorescent par une lumière d'activation d'une longueur d'onde d'activation et qui peuvent être excités en fluorescence par une lumière d'excitation d'une longueur d'onde d'excitation différente de la longueur d'onde d'activation,
a. l'échantillon (1) est éclairé par une lumière d'activation cohérente, un premier motif d'activation étant appliqué à la lumière d'activation en tant que premier motif d'éclairage de base, et le premier motif d'activation étant reproduit sur l'échantillon (1), de sorte que celui-ci est éclairé de manière structurée par la lumière d'activation, et simultanément
b. l'échantillon (1) est éclairé par une lumière d'excitation cohérente, un premier motif d'excitation, qui diffère du premier motif d'activation, étant appliqué à la lumière d'excitation en tant que deuxième motif d'éclairage de base, et le premier motif d'excitation étant reproduit sur l'échantillon (1) par l'intermédiaire d'un objectif de microscope (12), de sorte que l'échantillon (1) est éclairé de manière structurée par la lumière d'excitation, de sorte que seuls les fluorophores qui sont éclairés simultanément par la lumière d'activation et par la lumière d'excitation émettent des signaux de fluorescence,
c. les signaux de fluorescence sont reproduits sur un détecteur de surface (16) et enregistrés comme valeurs d'intensité, et une première image individuelle est produite à partir des valeurs d'intensité enregistrées,
d. l'éclairage est interrompu au moins avec une lumière d'activation jusqu'à ce que la majeure partie des fluorophores soit passée à un état de base non activé,
- les étapes a. à d. sont répétées avec d'autres motifs d'activation et d'autres motifs d'excitation, qui se distinguent respectivement les uns des autres, et d'autres images individuelles sont produites.

6. Procédé selon la revendication 5, **caractérisé en ce que**, pour produire le premier motif d'activation et le premier motif d'excitation, on éclaire respectivement la même zone d'un diffuseur (8) dans le trajet de faisceau d'éclairage, le diffuseur (8) étant reproduit dans une pupille d'entrée d'un objectif de microscope (12) et de là sur l'échantillon (1), et pour produire les autres motifs d'activation et d'excitation, on fait tourner le diffuseur (8) autour d'un axe optique (9) ou on le déplace latéralement par rapport à celui-ci.

7. Dispositif de microscopie à fluorescence haute résolution d'un échantillon (1) marqué avec des fluorophores, les fluorophores pouvant être excités en fluorescence par des processus non linéaires ou par des processus de commutation, ledit dispositif comprenant
- des moyens d'éclairage,
- des moyens de génération de motifs avec lesquels, lors d'un éclairage avec les moyens d'éclairage, au moins deux motifs d'éclairage de base différents, variant statistiquement dans l'espace, sont générés simultanément,
- un objectif de microscope (12) avec lequel les motifs d'éclairage de base sont reproduits sur l'échantillon (1) et superposés en un motif d'éclairage effectif,
- des moyens de détection avec un détecteur de surface (16), sur lequel des signaux de fluorescence émis par l'échantillon (1) sont reproduits au moyen de l'objectif de microscope (12) et sont détectés sous forme d'image individuelle,
- des moyens pour faire varier les au moins deux motifs d'éclairage de base au moins entre deux prises de vue d'images individuelles, et
- des moyens d'évaluation permettant de calculer une image globale à partir de plusieurs images individuelles.

8. Dispositif selon la revendication 7, **caractérisé en ce que** les moyens de génération de motifs comprennent un générateur de speckle.

9. Dispositif selon la revendication 8, **caractérisé en ce que** le générateur de speckle comprend LCOS, DOE, MEMS, AOM, au moins un diffuseur (8), et/ou au moins un objet ayant une surface optiquement rugueuse avec une rugosité supérieure à la plus grande longueur d'onde de la lumière émise par les moyens d'éclairage.

10. Dispositif selon la revendication 8 ou 9, dans lequel le générateur de speckle comprend un diffuseur (8) qui peut être mis en rotation autour d'un axe optique (9) ou déplacé perpendiculairement à celui-ci pour faire varier les motifs d'éclairage de base.

11. Dispositif selon l'une quelconque des revendications 7 à 10, dans lequel les moyens d'éclairage sont conçus pour émettre une lumière cohérente de deux longueurs d'onde qui, en coopération dans le motif d'éclairage effectif, là où les au moins deux motifs d'éclairage de base se superposent de manière éclairante, excitent les fluorophores pour qu'ils deviennent fluorescents.

12. Dispositif selon l'une quelconque des revendications 7 à 11, comprenant des moyens d'interruption pour interrompre l'éclairage de l'échantillon (1) pendant une durée prédéterminée entre les prises de vue de deux images individuelles.
